(19) Europäisches Patentamt
European Patent Office
Office européen des brevets

(11) **EP 3 202 829 B1**

(12) **EUROPEAN PATENT SPECIFICATION**

(45) Date of publication and mention of the grant of the patent:
**29.01.2020 Bulletin 2020/05**

(21) Application number: **15847785.1**

(22) Date of filing: **30.09.2015**

(51) Int Cl.:
**B29C 51/02** *(2006.01)* **B29C 44/50** *(2006.01)*
**B29C 44/56** *(2006.01)* **B29C 49/22** *(2006.01)*
**B29C 49/48** *(2006.01)* **B29C 48/16** *(2019.01)*
**B32B 1/02** *(2006.01)* **B32B 5/18** *(2006.01)*
**B32B 5/32** *(2006.01)* **B32B 27/06** *(2006.01)*
**C08J 9/36** *(2006.01)* **C08J 9/00** *(2006.01)*
**C08J 9/14** *(2006.01)* **B29K 77/00** *(2006.01)*
**B29K 105/04** *(2006.01)* **B29C 48/00** *(2019.01)*
**B29C 48/08** *(2019.01)* **B29C 48/09** *(2019.01)*
**B29C 48/32** *(2019.01)* **B29C 48/86** *(2019.01)*
**B29C 48/92** *(2019.01)*

(86) International application number:
**PCT/JP2015/077805**

(87) International publication number:
**WO 2016/052647 (07.04.2016 Gazette 2016/14)**

(54) **USE OF A RESIN EXPANDED SHEET, AND METHOD FOR PRODUCING A RESIN EXPANDED MOLDED ARTICLE**

VERWENDUNG EINER HARZSCHAUMFOLIE, UND VERFAHREN ZUR HERSTELLUNG EINES HARZSCHAUMFORMKÖRPERS

UTILISATION D'UNE FEUILLE DE MOUSSE EN RÉSINE, ET PROCÉDÉ DE PRODUCTION D'UN ARTICLE MOULÉ EN MOUSSE DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014 JP 2014200882**

(43) Date of publication of application:
**09.08.2017 Bulletin 2017/32**

(73) Proprietor: **Sekisui Plastics Co., Ltd.**
**Osaka-shi,**
**Osaka 530-8565 (JP)**

(72) Inventors:
• **MATSUURA, Haruhiko**
**Tenri-shi**
**Nara 632-8505 (JP)**
• **KOBAYASHI, Hironori**
**Tenri-shi**
**Nara 632-8505 (JP)**
• **SHINDO, Masahiro**
**Tenri-shi**
**Nara 632-8505 (JP)**
• **TAI, Tetsuro**
**Tenri-shi**
**Nara 632-8505 (JP)**

(74) Representative: **Müller-Boré & Partner**
**Patentanwälte PartG mbB**
**Friedenheimer Brücke 21**
**80639 München (DE)**

(56) References cited:
EP-A1- 0 934 974    EP-A1- 1 853 655
EP-A1- 2 626 377    WO-A1-2004/006991
JP-A- H0 847 978    JP-A- H05 261 806
JP-A- H05 261 806    JP-A- 2000 086 800
JP-A- 2000 086 800    JP-A- 2007 069 103
JP-A- 2014 114 405    JP-U- H0 642 746
US-A- 3 152 054    US-A- 3 451 974

## EP 3 202 829 B1

**Description**

The present invention relates to the use of a resin expanded sheet and a method for producing a resin expanded molded article, and more particularly, it relates to the use of a resin expanded sheet having a resin expanded layer, which is formed of a polyamide-based resin composition, and a method for producing a resin expanded molded article, in which such a resin expanded sheet is subjected to outer shape processing to produce a resin expanded molded article.

In the past, a resin expanded sheet, obtained by extrusion-expanding a resin composition including mainly a general-purpose polystyrene resin (GPPS), was also called a polystyrene paper (PSP) or the like, and has been used in various intended uses.

The polystyrene paper is subjected to outer shape processing so as to have a predetermined contour shape, and is utilized as a flat-shaped resin expanded molded article, and additionally, is widely used as a raw material of a resin expanded molded article having a three-dimensional shape, such as a food tray.

Upon production of this kind of the resin expanded molded article, usually, a long belt-shaped resin expanded sheet which has been wound roll-like, called a web roll, is used as a raw material.

Specifically, the resin expanded molded article is prepared by a method of simply punching a resin expanded sheet which has been wound off from the web roll, or imparting a three-dimensional shape to the sheet by thermal molding, and thereafter, punching the shaped sheet.

When thermal molding is conducted, the resin expanded molded article is prepared by a method of performing, in order, a pre-heating step of heating to soften a resin expanded sheet with a radiation heater or the like; a molding step of deforming the resin expanded sheet which has been softened in the pre-heating step so as to follow a surface shape of molding cavities to form a product shape in the resin expanded sheet; and a cutting step of cutting the resin expanded sheet along a product's contour shape to excise a resin expanded molded article from the resin expanded sheet.

In addition, as this kind of the resin expanded sheet, not only a sheet of a resin expanded layer alone, such as PSP, but also a type obtained by integrally laminating a resin expanded layer and a resin film layer are known.

Additionally, as this kind of the resin expanded sheet, not only a sheet obtained by forming a resin expanded layer of a polystyrene-based resin composition including mainly GPPS, but also a sheet having a resin expanded layer which is formed of a polyamide-based resin composition, as shown in the following Patent Document 1, are known.

US 3,152,054 A describes a process for the treatment of polycaprolactam articles. EP 1 853 655 A0 describes polyamide foams, a process to make them and applications thereof. JP H05-261806 A describes the manufacture of polyamide biaxially oriented film. JP 2000-086800 A describes a polyamide resin foamed product and a production thereof. EP 2 626 377 A1 describes a molded polyamide resin article.

Patent Document 1: Japanese Unexamined Patent Application, First Publication No. 2013-185074

A resin expanded molded article which is produced by the above-mentioned method is usually required to have little unevenness in a shape or the like.

However, when a resin expanded sheet having a resin expanded layer which is formed of a polyamide-based resin composition is adopted as a raw material, the conventional resin expanded molded article has a problem that it is difficult to satisfy the above-mentioned demand.

Thus, an object of the present invention is to solve such a problem.

The present inventors intensively studied to solve the above-mentioned problems, and found out that the above-mentioned problem is such that since the resin expanded sheet is usually in the dried state when subjected to outer shape processing, a water absorption rate is easily increased after outer shape processing, to generate change in an outer shape in the resin expanded molded article, and in a resin expanded sheet in which a resin expanded layer is formed of a polyamide-based resin composition having a high water absorption rate as compared with general resins, change in an outer shape is easily manifested, resulting in completion of the present invention.

That is, the resin expanded sheet used according to the present invention for solving the above-mentioned problem is used in thermal molding in which a three-dimensional shape is formed with molding cavities after pre-heating the resin expanded sheet in formation of a resin expanded molded article after cutting the resin expanded sheet along a product's contour shape, the resin expanded sheet comprising a resin expanded layer, in which the resin expanded layer includes a polyamide-based resin composition, and contains moisture at 30% or more with respect to an equilibrium water absorption rate at a temperature of 23°C and a relative humidity of 60%, as measured by JIS K0068:2001.

Additionally, the method for producing a resin expanded molded article of the present invention for solving the above-mentioned problem is a method for producing a resin expanded molded article, the method comprising subjecting a resin expanded sheet including a resin expanded layer to outer shape processing and performing thermal molding in the outer shape processing to form the resin expanded sheet into a three-dimensional shape using molding cavities after pre-heating the resin expanded sheet, followed by cutting the resin expanded sheet along a product's contour shape to produce a resin expanded molded article, in which a resin expanded sheet is used in which the resin expanded layer is formed of a polyamide-based resin composition, and the outer shape processing is carried out while the resin expanded layer contains moisture at 30% or more with respect to an equilibrium water absorption rate of the resin expanded layer at a temperature of 23°C and a relative humidity of 60%, as measured by JIS K0068:2001.

In the resin expanded sheet used in the present invention, the resin expanded layer formed of a polyamide-based resin composition contains moisture in the state near an equilibrium water absorption rate at the so-called standard state.

Accordingly, in accordance with the present invention, change in a water absorption rate of the resin expanded layer before and after outer shape processing is little, and change in an outer shape of the resin expanded molded article associated with change in the water absorption rate can be suppressed.

Fig. 1 is a schematic perspective view of a resin expanded sheet of one aspect.

Fig. 2a is a view showing a container (internal fitting container) of one aspect of a resin expanded molded article obtained by thermally molding a resin expanded sheet.

Fig. 2b is a I-I line arrow cross-sectional view in Fig. 2a.

Fig. 3a is a view showing a container (external fitting container) of other aspect of a resin expanded molded article obtained by thermally molding a resin expanded sheet.

Fig. 3b is a II- II line arrow cross-sectional view in Fig. 3a.

Fig. 4a is a view showing a container (internal and external fitting container) of other aspect of a resin expanded molded article obtained by thermally molding a resin expanded sheet.

Fig. 4b is a III-III line arrow cross-sectional view in Fig. 4a.

Fig. 5 is a schematic view showing the main point for measuring the average cell diameter of a resin expanded sheet.

The resin expanded sheet used in the present invention is useful for a resin expanded molded article having a flat shape, such as a flat sheet and a flat board.

The resin expanded sheet used in the present invention is also useful for forming a resin expanded molded article having a three-dimensional shape, such as a tray obtained by thermally molding a flat sheet and a box obtained by assembling using a flat board.

The resin expanded sheet used in the present invention is a resin expanded sheet used in thermal molding in which a three-dimensional shape is formed with molding cavities after pre-heating the resin expanded sheet in formation of a resin expanded molded article after cutting the resin exapnded sheet along a product's contour shape, the resin expanded sheet comprising a resin expanded layer, in which the resin expanded layer includes a polyamide-based resin composition, and contains moisture at 30% or more with respect to an equilibrium water absorption rate at a temperature of 23°C and a relative humidity of 60%, as measured by JIS K0068:2001.

That is, the resin expanded sheet used in the present invention has at least one resin expanded layer, and the resin expanded layer is formed of a polyamide-based resin composition.

As described above, the resin expanded sheet used in the present invention is such that 30% or more of moisture is contained in the resin expanded layer, letting an equilibrium water absorption rate of the resin expanded layer at a temperature of 23°C and a relative humidity of 60% to be 100%.

By way of an example of the case where the resin expanded sheet is used in thermal molding from a view point that the effect of the present invention is more easily exerted, the resin expanded sheet and the method for producing the resin expanded molded article will be explained below.

Additionally, by way of an example of the case where the resin expanded sheet for thermal molding is composed of a single resin expanded layer, an embodiment of the present invention will be illustrated below.

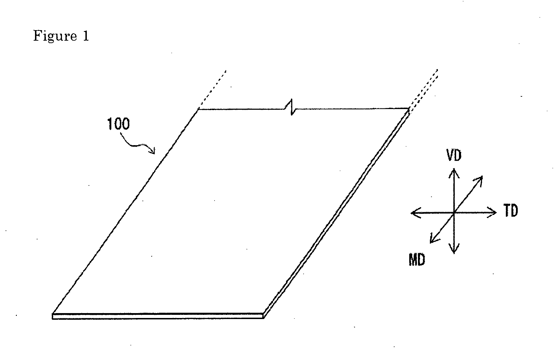

A resin expanded sheet 100 in the present embodiment is formed into a long belt shape, as shown in Fig. 1.

The resin expanded sheet 100 in the present embodiment (hereinafter, also simply referred to as "expanded sheet") is such that the resin expanded layer is formed of a polyamide-based resin composition.

The polyamide-based resin composition in the present embodiment includes mainly a polyamide-based resin (A), and further contains a component (B) for expansion and various additives (C).

(A) Polyamide-based Resin

A polyamide-based resin used in forming the expanded sheet may be either a homopolycondensation type or a copolycondensation type.

The polyamide-based resin can be, in the case of the homopolycondensation type, for example, a polyamide 6 which is obtained by ring-opening polymerization of ε-caprolactam, a polyamide 11 which is obtained by ring-opening polymerization of undecanelactam, a polyamide 12 which is obtained by ring-opening polymerization of lauryllactam, and the like.

Additionally, the polyamide-based resin can be, in the case of the copolycondensation type, a polyamide 4,6 which is obtained by polycondensation of tetramethylenediamine and adipic acid, a polyamide 6,6 which is obtained by polycondensation of hexamethylenediamine and adipic acid, a polyamide 6,10 which is obtained by polycondensation of hexamethylenediamine and sebacic acid, a polyamide 6T which is obtained by polycondensation of hexamethylenediamine and terephthalic acid, a polyamide 6I which is obtained by polycondensation of hexamethylenediamine and isophthalic acid, a polyamide 9T which is obtained by polycondensation of nonanediamine and terephthalic acid, a polyamide 5MT, which is obtained by polycondensation of methylpentadiamine and terephthalic acid, a polyamide 6,12 which is obtained by polycondensation of caprolactam and lauryllactam, and the like.

Further, the polyamide-based resin may be a so-called aromatic polyamide, as far as it is the copolycondensation type, and can be poly-p-phenyleneterephthalamide which is obtained by polycondensation of p-phenylenediamine and terephthalic acid, poly-m-phenyleneisophthalamide which is obtained by polycondensation of m-phenylenediamine and isophthalic acid, and the like.

One kind alone of these polyamide-based resins may be contained in the polyamide-based resin composition, or two or more of them may be contained in the polyamide-based resin composition.

The content of the polyamide-based resin in the polyamide-based resin composition is usually 50% by mass or more.

The content of the polyamide-based resin in the polyamide-based resin composition is preferably 75% by mass or more, and particularly preferably 90% by mass or more.

In addition, if necessary, a resin other than the polyamide-based resin may be contained in the polyamide-based resin composition.

Examples of the resin other than the polyamide-based resin which can be contained in the polyamide-based resin composition include a polystyrene resin, a polyethylene resin, a polypropylene resin, a polyethylene terephthalate resin, a polybutylene terephthalate resin, a polyethylene naphthalate resin, a polycarbonate resin, and the like.

The ratio of other resin occupied in all resin components in the polyamide-based resin composition is usually more than 0% by mass and 50% by mass or less.

The ratio of other resin is preferably 10% by mass or less, and more preferably 5% by mass or less.

(B) Expanding Component

Examples of a component for expanding the resin include a blowing agent (B1), a cell nucleating agent (B2), and the like.

(B1) Blowing Agent

As the blowing agent, the same blowing agents as those used in general extrusion expansion of resins can be adopted.

Examples of the blowing agent include hydrocarbons such as propane, normal butane, isobutane, normal pentane, isopentane, and hexane; ketones such as acetone, methyl ethyl ketone, and acetylacetone; ethers such as dimethyl ether; halogenated hydrocarbons such as methyl chloride and ethyl chloride; inorganic gases such as carbon dioxide, nitrogen, and the air; and the like.

Among them, the blowing agent is preferably any of normal butane, isobutane, dimethyl ether, and carbon dioxide.

The content of the blowing agent in the polyamide-based resin composition is preferably 0.5 parts by mass or more and 10 parts by mass or less, based on 100 parts by mass of the all resin components contained in the polyamide-based resin composition.

(B2) Cell Nucleating Agent

As the cell nucleating agent, cell nucleating agents which are generally widely used can be adopted.

Examples of the cell nucleating agent include inorganic compounds such as talc, mica, silica, diatomaceous earth, alumina, titanium oxide, zinc oxide, magnesium oxide, magnesium hydroxide, aluminum hydroxide, calcium hydroxide, potassium carbonate, calcium carbonate, magnesium carbonate, potassium sulfate, barium sulfate, sodium bicarbonate, and glass beads; organic compounds such as polytetrafluoroethylene, azocarbonamide, and a mixture of sodium bicarbonate and citric acid; inert gases such as nitrogen; and the like.

In the present embodiment, it is preferable that the cell nucleating agent is talc.

In addition, the cell nucleating agents may be used alone, or two or more may be used concurrently by mixing them.

The content of the cell nucleating agent in the polyamide-based resin composition is preferably 0.01 parts by mass or more and 10 parts by mass or less, based on 100 parts by mass of the all resin components contained in the polyamide-based resin composition.

(C) Additive

As the additive, additives which have previously been used in processing thermoplastic resins may be contained appropriately, depending on necessity.

Examples of the additive include a weather-resistant agent, a light stabilizer, an ultraviolet absorbing agent, an antioxidant, a pigment, a dye, a flame retardant, a crystal nucleating agent, a crystallization retarding agent, a plasticizer, a lubricant, a surfactant, a dispersant, a filler, a reinforcing agent, an antistatic agent, and the like.

The expanded sheet of the present embodiment can be prepared by extrusion-expanding the polyamide-based resin composition containing the materials as described above into a sheet from an extruder or the like.

More specifically, the expanded sheet can be obtained by supplying a blend obtained by dry blending all materials except for the blowing agent at the predetermined ratio, or a blend which has been fully compounded, to an extruder equipped with a circular die, a flat die or the like, melt-kneading the blend in the extruder, and at the same time, pressing the blowing agent therein at a midpoint of the extruder, adding the blowing agent to the melt-kneaded blend, further performing melting and kneading, and extrusion-expanding the resulting melt-kneaded product into a sheet shape from a die slit of a circular die or a flat die.

Such an expanded sheet is usually produced with an extruder continuously, and is produced as a long belt shaped product.

The long belt shaped expanded sheet which has been extrusion-expanded from the die slit is wound into a roll shape to obtain a web roll for thermal molding.

The web roll is such that a film is laminated on one side or both sides of the expanded sheet, or is supplied as it is to thermal molding, and is used in preparing a resin expanded molded article.

The thermal molding is usually carried out by any method among vacuum molding, pressure molding, vacuum/pressure molding, press molding, matched mold molding, and the like.

After the thermal molding, an expanded sheet to which a product shape has been imparted is subjected to punching using a Thomson blade type or a punching press, and the expanded sheet is separated into a product (resin expanded molded article) and a punching scrap.

That is, impartation of a three-dimensional shape by thermal molding, and impartation of a contour shape by punching are performed as outer shape processing for the expanded sheet of the present embodiment.

In addition, upon such thermal molding, there is performed a step of heating the expanded sheet in advance to soften the expanded sheet so that it is easily deformable, and at the same time, increase a pressure of cells in the expanded sheet so that the thickness of the expanded sheet is not excessively decreased.

In the step, new cells are generated in a cell membrane by the blowing agent remaining in the expanded sheet, and the expansion is called "secondary expansion" in a sense that it is discriminated from expansion at extrusion.

In the step of heating this expanded sheet, a surface of the expanded sheet becomes to have a highest temperature, and becomes in the most softened state.

Upon thermal molding, the expanded sheet in such state is brought into pressure contact with molding cavities.

Accordingly, when a foreign matter is attached to the expanded sheet, the expanded sheet on which the foreign matter is simply placed thereon becomes in the state where the foreign matter is intruded into the expanded sheet after thermal molding, and it becomes impossible to remove the foreign matter.

From such a thing, usually, after the expanded sheet is wound into a roll shape subsequent to extrusion expanding from a die slit as described above, the expanded sheet is rapidly covered with a polyethylene bag for being shielded from dust.

Additionally, generally, the expanded sheet made of a polyamide-based resin is hardly secondarily-expanded as compared with the expanded sheet made of a polystyrene resin.

For this reason, in a sense that the blowing agent is prevented from being scattered and lost, and the expanded sheet is made to be easily secondarily-expanded, it is preferable that the expanded sheet made of a polyamide-based resin is stored in the state where airtightness is kept.

Herein, upon extrusion expansion, the polyamide-based resin is used after sufficient drying, in order to prevent thermal degradation, further, since a resin in the melt state at a high temperature is discharged from a die, and at the same time, moisture contained in the resin is volatilized and made scattered and lost, the expanded sheet immediately after extrusion expansion usually contains little moisture.

Based on the reason as described above, the expanded sheet which has been stored in the state where airtightness is kept is also maintained in the low moisture state, at thermal molding.

Thus, the resin expanded molded article after thermal molding absorbs water until an equilibrium water absorption rate is reached, by being placed under the environment at an ambient temperature and an ambient humidity, and the water absorption causes change in an outer shape.

In the present embodiment, in order to prevent the change in an outer shape from occurring in the resin expanded molded article, a water absorbing step for adjusting an amount of moisture in the expanded sheet is performed between a step of preparing a sheet by the extrusion expansion and a molding step by the thermal molding.

In the present embodiment, the water absorption step brings the expanded sheet into the state where the sheet contains moisture at 30% or more with respect to an equilibrium water absorption rate at a temperature of 23°C and a relative humidity of 60%. That is, in the present embodiment, a sheet preparing step of preparing an expanded sheet having the content of moisture of less than 30% with respect to an equilibrium water absorption rate of the expanded sheet at a temperature of 23°C and a relative humidity of 60%, and a water absorbing step of allowing the expanded sheet obtained in the sheet preparing step to absorb water, to make the content of moisture 30% or more of an equilibrium water absorption rate are performed, and outer shape processing is performed on the expanded sheet after the water absorbing step.

In the present embodiment, since the thermal molding is performed on the expanded sheet in the state described above, the resin expanded molded article after thermal molding can be suppressed from absorbing water.

For this reason, in the method for producing a resin expanded molded article of the present embodiment, a resin expanded molded article which hardly causes change in an outer shape can be obtained.

In addition, for exerting such effect more remarkably, the content of moisture in the expanded sheet to be subjected to outer shape processing is preferably 40% or more, more preferably 60% or more, and particularly preferably 75% or more, with respect to the equilibrium water absorption rate.

As the water absorbing step, for example, a method of simply storing a web roll under the predetermined humidity environment for a certain period of time may be adopted.

In that case, the long time is required until the expanded sheet contains predetermined moisture.

For this reason, in place of such a method, the water absorbing step may be performed so that the web roll is stored under the heating and humidification environment (for example, 30°C to 50°C, relative humidity 50% to 95%), and water absorption by the expanded sheet is promoted.

In addition, when the web roll is wound on a winding core made of a moisture impermeable material such as a metal and resin, a degree of water absorption becomes easily different between a part near the winding core and an outer circumferential part as the web roll becomes wider and has a larger diameter.

Additionally, also in the case where there is no winding core, or in the case where the winding core has moisture permeability, or the like, an intermediate part between an inner circumferential part and an outer circumferential part of the web roll easily becomes to have the low moisture content as compared with the inner circumferential part and the outer circumferential part.

Accordingly, it is preferable that the water absorbing step includes a re-winding step of re-winding the web roll or a step of relaxing the web roll to provide spaces between the expanded sheets.

What degree of moisture is actually contained in the expanded sheet can be confirmed by performing assessment on the expanded sheet by the Carl Fischer titration method (moisture vaporizing method) described in JIS K0068:2001 (Test Methods for Water Content of Chemical Products).

Specifically, an amount of moisture in the expanded sheet can be confirmed by the following method.

(Moisture Amount Measuring Method)

About 70 mg of a sample is collected from the expanded sheet.

The sample is set in a Carl Fischer moisture measuring device CA-200 and a moisture vaporizing device VA-236S manufactured by Mitsubishi Chemical Analytech Co., Ltd., and a moisture amount is measured.

As an anode liquid and a cathode liquid at measurement, AQUAMICRON AX and AQUAMICRON CXU manufactured by API CORPORATION are used, respectively.

A measuring temperature is set at 230°C.

As a carrier gas, nitrogen is used, and a flow rate thereof is set at 250 mL/min.

Collection of the sample from the expanded sheet and measurement of a moisture amount are performed three times.

Additionally, a blank test using only a container containing no sample is performed two times, and an average of the resulting moisture amount is obtained.

By subtracting a value of the moisture amount obtained from the blank test from a value of the moisture amount obtained by measuring the sample, the moisture amount of each sample is calculated.

A water absorption rate of the expanded sheet can be confirmed by the following method.

(Method for Obtaining Water Absorption Rate)

By dividing a moisture amount of a sample by a mass of the sample, the moisture ratio (% by mass) is obtained.

The moisture ratio is obtained concerning each of three samples, and an arithmetic average is adopted as a water absorption rate (% by mass) of the expanded sheet.

An equilibrium water absorption rate of the expanded sheet at a temperature of 23°C and a relative humidity of 60% can be obtained by measuring a mass of the expanded sheet every 24 hours while allowing the expanded sheet to stand at a temperature of 23°C and a relative humidity of 60%, and measuring the moisture amount as described above, at the time point at which change in a mass becomes within ± 0.1%.

In addition, an equilibrium water absorption rate of the polyamide-based resin at a temperature of 23°C and a relative humidity of 60% is known, and for example, the rate is 3.5% by mass in a polyamide 6, the rate is 2.5% by mass in a polyamide 6,6, and the rate is around 1.5% by mass in a polyamide 6,10.

The thickness of the expanded sheet is usually 0.5 mm or more and 3.0 mm or less.

The basis weight of the expanded sheet is usually 100 g/m² or more and 1,000 g/m² or less.

For rapidly carrying out the water absorbing step, it is preferable that the expanded sheet has the open cell ratio to a certain degree or more.

On the other hand, in view of workability at thermal molding, strength of the resin expanded molded article obtained by thermal molding, and the like, it is preferable that the expanded sheet has the low open cell ratio.

The open cell ratio of the expanded sheet is preferably 5% or more and 60% or less, more preferably 10% or more and 40% or less, and particularly preferably 15% or more and 30% or less.

Herein, the open cell ratio can be measured as follows.

(Open Cell Ratio Measuring Method)

A plurality of test pieces of length 25 mm × width 25 mm are excised from the expanded sheet.

The excised test pieces are overlapped so that no space is formed, to prepare five test specimens having the thickness of about 25 mm.

An outer dimension of the resulting test specimens is measured to 1/100 mm using "Digimatic Caliper" manufactured by Mitutoyo Corporation, and the apparent volume (cm³) is obtained.

Then, using an air-comparison pycnometer Type 1000 (manufactured by Tokyoscience Co., Ltd.), the volume (cm³) of the test specimens is obtained by the 1-1/2-1 atm method.

The open cell ratio (%) is calculated by the following equation, an arithmetic average of the open cell ratio of the five test specimens is obtained, and the average is adopted as the open cell ratio of the expanded sheet.

In addition, measurement is performed under the environment of JIS K7100-1999 Symbol 23/50, 2-Class, after the test specimens are stored for 16 hours under the environment of JIS K7100-1999 Symbol 23/50, 2-Class.

Additionally, the air-comparison pycnometer is corrected with a standard sphere (Large 28.96 cc Small 8.58 cc).

$$\text{Open cell ratio (\%)} = 100 \times (\text{apparent volume - volume measured with air-comparison pycnometer}) / \text{apparent volume}$$

In the expanded sheet, when the average cell diameter is too large, the number of cells existing in the expanded sheet is reduced.

Since the expanded sheet having the small number of cells becomes to have a thick cell membrane as compared with the expanded sheet having a large number of cells, heat insulating property and cushioning property become inferior.

On the other hand, when the average cell diameter of the expanded sheet is too small, the number of cells existing in the expanded sheet becomes very large.

When the number of cells contained in the expanded sheet becomes too large, since the thickness of the cell membrane becomes too thin and breakage is easily generated in the cell membrane, the expanded sheet becomes inferior in mechanical strength.

From such a thing, the average cell diameter of the expanded sheet is preferably 100 μm or more and 1,000 μm or less, more preferably 100 μm or more and 800 μm or less, and further preferably 100 μm or more and 600 μm or less.

The average cell diameter of the expanded sheet can be measured by the following testing method.

(Average Cell Diameter Measuring Method)

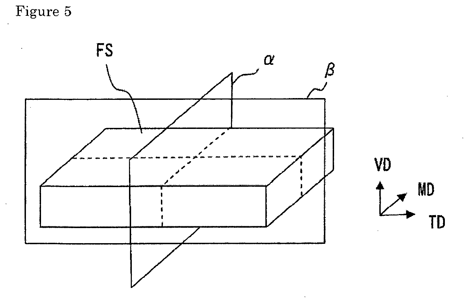

As shown in Fig. 5, the expanded sheet FS is cut at a central part in a width direction, along a plane (plane α of Fig. 5) vertical to a sheet plane and parallel with an extrusion direction (MD: Machine Direction), and a plane (plane β of Fig. 5) vertical to a sheet plane and parallel with a width direction (TD: Transverse Direction) orthogonal with an extrusion direction, and a cross section is photographed at magnification of 18 to 20 (in some cases, 200 magnification) with a scanning electron microscope S-3000N manufactured by Hitachi, Inc. or S-3400N manufactured by Hitachi High-Technologies Corporation. At that time, the taken photograph is printed on a size which is 1/4 of an A4 paper, and a magnification ratio with the electron microscope is adjusted so that the number of cells existing on a 60 mm straight line drawn on the printed photograph becomes around 10 to 20.

The photograph of a cross section parallel with MD is 4-images printed on an A4 paper.

On this printed photograph, an arbitrary straight line is drawn along a direction parallel with MD and a sheet thickness direction (VD: Vertical direction) vertical to the direction parallel with MD.

Additionally, the photograph of a cross section parallel with TD is 4 images printed on an A4 paper, and on this printed photograph, an arbitrary straight line is drawn in a direction parallel with TD and a sheet thickness direction (VD) vertical to the direction parallel with TD.

The length of all straight lines is made to be 60 mm in principle, and the average chordal length (t) of cells in each direction (MD, TD, VD) is calculated from the number of cells existing on these straight lines using the following equation (1).

$$\text{Average chordal length t (mm)} = 60/(\text{number of cells} \times \text{magnification of photograph}) \cdots (1)$$

When the thickness of the expanded sheet is too thin to count the number of cells corresponding to the length of 60 mm in VD (direction of sheet thickness), the number of cells corresponding to 30 mm or 20 mm is counted, and is converted into the number of cells corresponding to 60 mm. An arbitrary straight line is made such that cells are not contacted only at points of contact as less as possible. When there is a cell contacting only at points of contact, this cell is also included in the number of cells. Counting is performed for 3 places each, a total of 6 places, using two photographs per one direction.

As a magnification of photographs, a scale bar on the photograph is measured to 1/100 mm with "Digimatic Caliper" manufactured by Mitutoyo Corporation, and the magnification is obtained from the following equation (2).

$$\text{Magnification of photograph} = \text{actually measured value of scale bar (mm)/indicated value of}$$
$$\text{scale bar (mm)} \cdots (2)$$

Then, the cell diameter D in each direction is calculated by the following equation (3).

$$\text{D (mm)} = t/0.616 \cdots (3)$$

Further, a cube root of a product of them is adopted as the average cell diameter of the expanded sheet.

$$\text{Average cell diameter (mm)} = (\text{DMD} \times \text{DTD} \times \text{DVD})^{1/3} \cdots (4)$$

DMD: Cell diameter in MD (mm)
DTD: Cell diameter in TD (mm)
DVD: Cell diameter in VD (mm)

For making the expanded sheet exert excellent heat resistance, it is preferable that the polyamide-based resin contained in the expanded sheet is a resin having crystallinity.

In the expanded sheet, thermal deformation and the like can be prevented by that the contained polyamide-based resin has been crystallized.

It is preferable that a crystallization degree of the polyamide-based resin contained in the expanded sheet is 10% or more.

Possession of crystallinity by the polyamide-based resin can be confirmed using a differential scanning calorimetric device (for example, manufactured by Hitachi High-Tech Science Corporation, product name "DSC7000X").

That is, by indication of endotherm associated with melting or exotherm associated with crystallization of the polyamide-based resin, it can be confirmed that the polyamide-based resin has crystallinity.

Additionally, a crystallization degree of the polyamide-based resin in the expanded sheet can also be confirmed using a differential scanning calorimetric device.

Specifically, a crystallization degree of the polyamide-based resin can be measured by the method described in JIS K7122:2012 "Testing Methods for Heat of Transitions of Plastics". However, a sampling method and the temperature condition are as follows.

About 5 mg of a sample is filled on a bottom of a measurement container made of aluminum without forming any space, a temperature is lowered from 30°C to -40°C under a nitrogen gas flow rate of 20 mL/min., a temperature is retained for 10 minutes, and a DSC curve when a temperature is raised from -40°C to 290°C (1st Heating), a temperature is retained for 10 minutes, a temperature is lowered from 290°C to -40°C (Cooling), a temperature is retained for 10 minutes, and a temperature is raised from -40°C to 290°C (2nd Heating) is obtained. In addition, all temperature rising/temperature lowering are performed at a rate of 10°C/min., and as a standard substance, alumina is used.

A crystallization degree calculated from crystallization heat quantity is the ratio obtained by dividing crystallization heat quantity Q (J/g) obtained from an area of a crystallization peak seen in a Cooling process by theoretically melting heat quantity $\Delta Hf$ (J/g) of a complete crystal of the polyamide-based resin. Crystallization heat quantity is calculated from an area of a part surrounded with a straight line connecting a point at which a DSC curve is separated from the baseline on a high temperature side and a point at which the DSC curve is returned to the baseline on a low temperature side again, and the DSC curve, with use of analysis soft annexed to the device.

That is, the crystallization degree is obtained from the following equation.

$$\text{Crystallization degree (\%)} = (Q \ (J/g)/\Delta Hf \ (J/g)) \times 100$$

In addition, theoretical melting heat quantity ($\Delta Hf$) of a perfect crystal of the polyamide-based resin is different depending on a kind of a resin, but a value thereof is approximately 200 to 300 J/g (reference values of $\Delta Hf$, PA6: 230 J/g, PA11: 244 J/g, PA12: 245 J/g, PA66: 226 J/g, PA69: 257 J/g, PA610: 254 J/g, PA612: 258 J/g, ...).

From such a thing, it is preferable that the expanded sheet, when the above measurement is performed, exhibits crystallization heat quantity of 20 J/g or more, not depending on a kind of the polyamide-based resin to be used, and it is more preferable that the sheet exhibits crystallization heat quantity of 30 J/g or more.

The resin expanded molded article formed of the expanded sheet is not particularly limited, but a variety of resin expanded molded articles can be considered.

In addition, in the resin expanded molded article, a problem arising from dimensional change easily becomes evident, in the case of a relatively large type article.

In other words, in a relatively large type of the resin expanded molded article, the effect that dimensional change can be suppressed becomes remarkable.

Additionally, the resin expanded molded article of the present embodiment has excellent heat resistance and mechanical strength due to the polyamide-based resin.

From that a molded article is relatively large, the effect of dimensional change is remarkably exerted, and at the same time, a demand for lightness and mechanical strength is strong, examples of the resin expanded molded article which is preferably prepared by the method of the present embodiment include interior materials for automobiles which are used in a dashboard, a door panel, a ceiling material, a seat sheet, and the like.

Additionally, since a demand of dimensional stability, lightness, chemical resistance, oil resistance, heat resistance, and the like is strong, examples of the resin expanded molded article which is preferably prepared by the method of the present embodiment include a part for automobiles which is mounted in an engine room of automobiles or the like.

In addition, in resin expanded molded articles such as a food storage container, for heating the contained food product with a microwave oven, even when they are relatively small as the resin expanded molded article, a demand for dimensional stability, lightness, oil resistance, gas barrier property, and heat resistance is strong.

For this reason, the food storage container is also exemplified as the resin expanded molded article which is preferably prepared by the method of the present embodiment.

Additionally, due to a strong demand for dimensional stability, lightness, cushioning property, and the like, examples of the resin expanded molded article which is preferably prepared by the method of the present embodiment include a tray and the like.

Examples of products which are housed in the tray include a motor, a rotor for a motor, and the like.

A container for housing the motor or the rotor easily undergoes a locally strong force, by collision of a rotation axis or the like when the motor or the rotor is conveyed.

Since the resin expanded molded articles prepared by the method of the present embodiment are excellent in strength as compared with general-purpose expanded molded articles such as polystyrene resin expanded molded articles, they are preferably used in the aforementioned intended use.

A rate of dimensional change of resin expanded molded articles used in the above intended use is preferably 1% or less at an ambient temperature, and is preferably 3% or less at 150°C or lower.

Particularly, in the case where the food storage container is a container with a lid, the container becomes to be more preferably prepared by the method of the present embodiment.

This point will be illustrated below.

In containers with a lid of such a type that a lid body is fitted to a container body, such as a container with a lid in which a lid body is internally fitted to a container body, a container with a lid in which a lid body is externally fitted to a container body, or a container with a lid in which a lid body is internally and externally fitted to a container body, there is a possibility that when change in an external shape is generated in the container body or the lid body, the lid body becomes to be unable to be fitted to the container body, the lid body fitted to the container body becomes excessively difficult to uncouple, or the lid body fitted to the container body becomes excessively easy to uncouple.

For this reason, in a point that the effect of the present invention that change in an external shape is hardly generated, is effectively exerted, the resin expanded molded article made of the expanded sheet is preferably a container with a lid, provided with a container body and a lid body which is fitted to the container body, and particularly preferably a container body of the container with a lid.

This point will be illustrated in further detail while referring to the drawings.

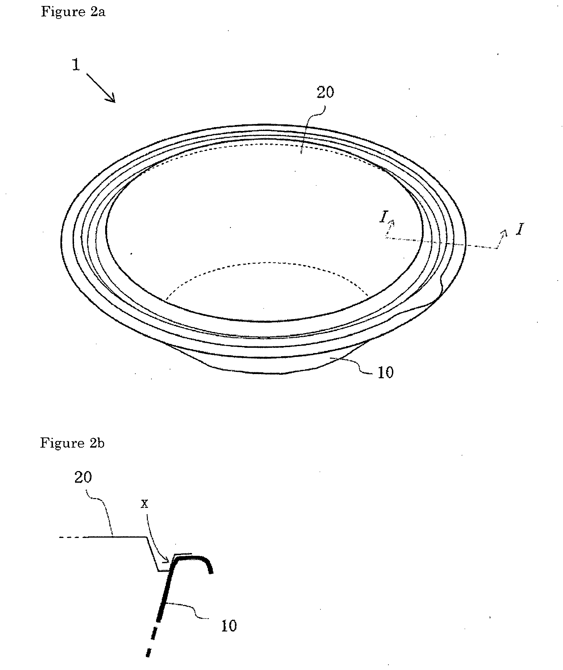

Fig. 2a shows a resin expanded molded article used as a microwavable container and the like.

Fig. 2b shows the fitting circumstances between a container body 10 and a lid body 20 in a container with a lid 1 shown in Fig. 2a, and is a view showing appearance of a I-I line arrow cross section in Fig. 2a.

In this figure, the container with a lid 1 in which a lid body 20 is internally fitted to a container body 10 (hereinafter, also referred to as "first container with a lid 1 ") is shown.

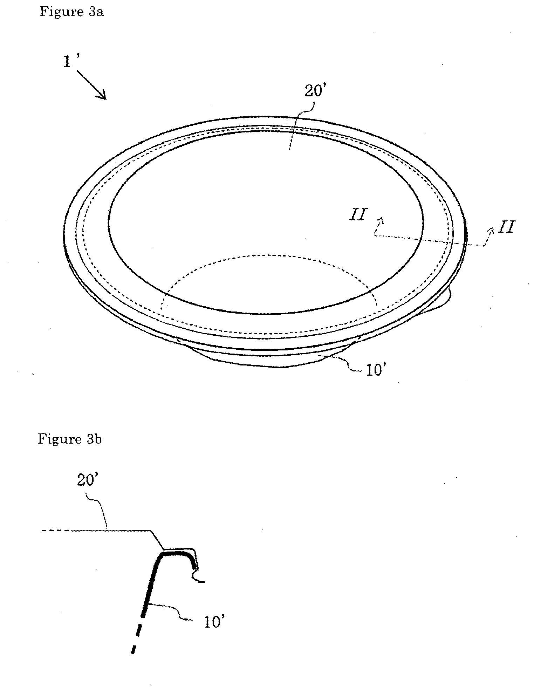

Additionally, Fig. 3a shows a container with a lid 1' in which a lid body 20' is externally fitted to a container body 10' (hereinafter, also referred to as "second container with a lid 1' "), and Fig. 3b is a view showing a II-II line arrow cross section in Fig. 3a.

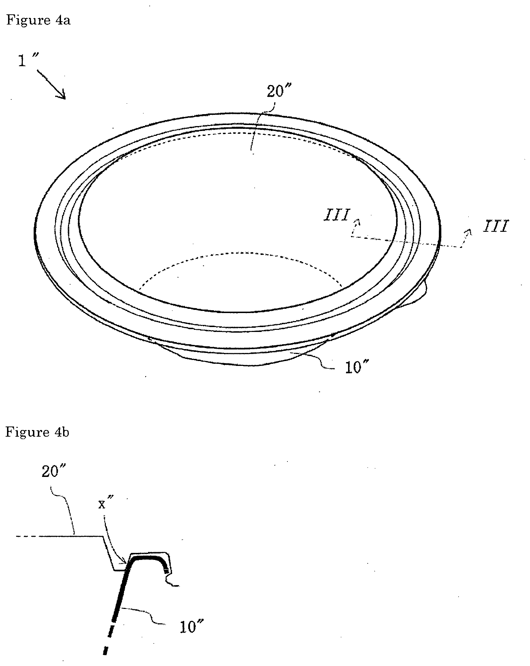

Further, Fig. 4a shows a container with a lid 1" in which a lid body 20" is internally and externally fitted to a container body 10" (hereinafter, also referred to as "third container with a lid 1" "), and Fig. 4b is a view showing a III-III line arrow cross section in Fig. 4a.

In addition, the lid body 20 of the first container with a lid 1 is usually prepared so that the size of a part sticking in an opening of the container body 10 is slightly larger than an opening of the container body 10.

From this thing, the first container with a lid 1 can act a strong pressure on an abutting part between the container body 10 and the lid body 20, shown in Fig. 2a with a symbol x.

Additionally, also regarding the third container with a lid 1", a strong pressure can be acted on an abutting part x" between the container body 10" and the lid body 20" like the first container with a lid 1.

For this reason, the container with a lid in which the lid body is internally fitted, such as the first container with a lid 1 and the third container with a lid 1", is widely used for the purpose of storing food product containing much liquid such as a stew.

When the container body is shrunk in this kind of the container with a lid, there is a possibility that it becomes difficult to attach or detach the lid body to or from the container body.

Additionally, when the container body is deformed in this kind of the container with a lid, there is a possibility that a pressure acting on the abutting part x, x" becomes insufficient, and when liquid is housed, the liquid easily leaks to the outside of the container.

From such a thing, the resin expanded molded article of the present embodiment exerts the excellent effect, by adopting the container body of the above-exemplified container with a lid as a specific aspect thereof.

On the other hand, the second container with a lid 1' is inferior in sealability as compared with the first container with a lid 1 or the like, but it has an advantage that attachment and detachment of the lid body 20' to the container body 10' are easy.

The second container with a lid 1' has a possibility that, when the container body is deformed, the lid body 20' is easily uncoupled from the container body 10' more than necessary.

Accordingly, the secondary effect which is exerted due to excellent dimensional stability of the container body is also exerted in the case where the resin expanded molded article is the second container with a lid 1'.

In the present embodiment, in a point that the resin expanded molded article as described above can be effectively produced by continuous thermal molding, an extrusion-expanded sheet is exemplified as the resin expanded sheet for thermal molding, but a sheet-like bead expanded molded body having the suitable thickness for thermal molding can also be utilized in thermal molding, like the extrusion-expanded sheet of the present embodiment.

Additionally, a sheet-like foam which was excised from a thick bead expanded molded body or a board expanded molded body by slicing can also be utilized in thermal molding, like the extrusion-expanded sheet of the present embodiment.

In the present embodiment, the case where the resin expanded sheet for thermal molding is composed of a single resin expanded layer is illustrated as an example, but one having a plurality of resin expanded layers, and a type that one or more resin film layers are laminated on one or more resin expanded layers are also within the range intended as the resin expanded sheet of the present invention.

In addition, in the case where the resin expanded sheet of the present embodiment is a type provided with two or more layers of the resin expanded layer including a polyamide-based resin composition, it is not necessary that all resin expanded layers have the moisture content of 30% or more with respect to an equilibrium water adsorption rate at a temperature of 23°C and a relative humidity of 60%, and it is enough that at least one or more layers of such moisture content are provided.

Additionally, concerning a method for producing the resin expanded sheet or the resin expanded molded article of the present embodiment, a variety of modifications can be added to the above-exemplified aspect in an extent that the effect of the present invention is not significantly impaired.

Further, as stated above, in the above description, in a point that the effect of the present invention is more remarkably exerted, a resin expanded sheet for thermal molding is exemplified as the resin expanded sheet, but the resin expanded sheet of the present invention can also be utilized for forming a resin expanded molded article such as a flat sheet or board.

That is, even in the case of a flat resin expanded molded article, it is required that dimensional change or the like is not generated after outer shape processing, like the resin expanded molded article to which a three-dimensional shape has been imparted by thermal molding, and a resin expanded sheet utilized in forming a flat resin expanded molded article is also within the range intended as the resin expanded sheet of the present invention.

Additionally, a method for producing a resin expanded molded article such as a flat sheet and board is also within the range intended as the method for producing a resin expanded molded article of the present invention.

EXAMPLES

Then, the present invention will be illustrated in further detail by way of Examples, but the present invention is not limited by them.

(Example 1)

As a polyamide-based resin, a polyamide 6 (manufactured by UNITIKA LTD., product name "A1030BRT"; density 1.13 g/cm$^3$) was provided.

The polyamide 6 was used by performing dehumidification at 120°C for 4 hours in advance.

Into 100 parts by mass of this resin (polyamide 6), a styrene-maleic anhydride copolymer (manufactured by CRAY VALLEY, product name "SMA1000P") at 0.3 parts by mass, and a master batch of polyethylene terephthalate (PET) and talc powder (talc 40%, PET 60%; manufactured by Terabo Co., Ltd. product name "PET-F40-1") at 2.5 parts by mass were blended, and a blend of them was mixed with a tumbler mixer.

A circular die having an annular slit having the diameter of 70 mm and the slit width of 0.6 mm was set at a tip of a single screw extruder (caliber 65 mm, L/D = 34), and a cylindrical mandrel for cooling (diameter 205 mm, length 400 mm) was arranged in front of an extrusion direction of this circular die.

Cooling was circulated in the mandrel for cooling, at the same time, the extruder was set at a predetermined temperature, and the blend was supplied to a hopper of the extruder, and melt-kneaded in the extruder.

Additionally, as a blowing agent, butane was injected under pressure at a middle of an extruder barrel, and added to the melt-kneading product, and melt kneading was further carried out.

A resin temperature at extrusion was set at 230°C, and a polyamide-based resin composition in the melt state was extrusion-expanded from a die slit of the circular die, at a discharge amount of 40 kg/h, to form a cylindrical foam.

The diameter of this cylindrical foam was extended with the mandrel for cooling, and the foam was drawn with a drawing machine disposed on a further downstream side from the mandrel cooling.

An external circumferential surface of the mandrel for cooling was sliding-contacted with an internal circumferential surface of the foam to cool the foam, and at the same time, the cylindrical foam was cut along an extrusion direction, on a downstream side of the mandrel for cooling.

The cylindrical foam was adjusted into a flat belt shape, which was wound into a roll with the drawing machine.

The density of the resulting expanded sheet was 0.24 g/cm$^3$, the basis weight was 200 g/m$^2$, and the open cell ratio was 20.0%.

When a moisture amount of the expanded sheet was measured immediately after production, the water moisture amount was found to be 0.24% by mass.

The resulting expanded sheet was cut into 330 mm × 330 mm, and was allowed to stand for 168 hours under the condition of 23°C and relative humidity of 60%.

Thereupon, a moisture amount of the expanded sheet was 3.8% by mass. (100% of moisture was contained with respect to an equilibrium water adsorption rate at a temperature of 23°C and a relative humidity of 60%.)

This expanded sheet was heated again to perform thermal molding, to prepare a resin expanded molded article.

This resin expanded molded article was allowed to stand for 168 hours under 23°C and a relative humidity of 60%.

As a result, a dimensional change rate with respect to immediately after molding of the resin expanded molded article was 0.41%.

Herein, thermal molding was performed as follows.

That is, four ends of the expanded sheet were crumped, and introduced into a heating furnace for pre-heating, in which upper and lower heater temperatures were set at 330°C.

The expanded sheet was heated in this heating furnace for 7 seconds, then, this expanded sheet was introduced into a press molding machine to perform molding.

At that time, as molding cavities, molds made of aluminum which had been subjected to surface treatment with a polytetrafluoroethylene resin coating were used.

The expanded sheet was molded in the molding cavities, to prepare a rectangular box shaped resin expanded molded article having the size of an opening and a bottom portion of 50 (length) × 50 (width) mm and the depth of 30 mm.

Additionally, a dimensional change rate of the resin expanded molded article was calculated as follows.

(Dimensional Change Rate Measuring Method)

Dimensions of the length (bottom portion), the width (bottom portion), and the depth (L1, L2, L3) immediately after molding in a concave resin expanded molded article having the size of an opening and that of a bottom portion of 50 (length) × 50 (width) mm, and the depth of 30 mm, are measured.

Thereafter, the resin expanded molded article is allowed to stand for 168 hours under 23°C and a relative humidity of 60%, and sizes of the length (bottom portion), the width (bottom portion), and the height (L3, L4, L5) after allowing to stand are measured.

Absolute values (A, B, C) of respective dimensional change rates are obtained by the following equations, and an average thereof is adopted as a dimensional change rate of the resin expanded molded article.

$$\text{Absolute value A of change rate of length (bottom portion) (\%)} = |100 \times ((L3 - L1)/L1)|$$

$$\text{Absolute value B of change rate of width (bottom portion) (\%)} = |100 \times ((L4 - L2)/L2)|$$

$$\text{Absolute value C of change rate of depth (\%)} = |100 \times ((L5 - L3)/L3)|$$

$$\text{Dimensional change rate of molded article (\%)} = (A + B + C)/3$$

(Example 2)

According to the same manner as in Example 1 except that the expanded sheet, the moisture content of which had been regulated at 2.5% by mass (65.8% with respect to equilibrium water absorption rate at a temperature of 23°C and a relative humidity of 60%) was used, thermal molding was performed to prepare a rectangular box shaped resin expanded molded article, and a dimensional change rate was obtained.

In addition, after the expanded sheet was excised into 330 mm × 330 mm, the time for retaining the excised sheet under the environment of 23°C and relative humidity of 60% was regulated to adjust a moisture amount thereof at 2.5% by mass.

A rectangular box shaped resin expanded molded article obtained by thermally molding this expanded sheet had a dimensional change rate with respect to immediately after molding, of 0.61%.

(Example 3)

According to the same manner as in Example 1 except that the expanded sheet, the moisture content of which had been regulated at 1.7% by mass (44.7% with respect to equilibrium water absorption rate at a temperature of 23°C and a relative humidity of 60%) was used, thermal molding was performed to prepare a rectangular box shaped resin expanded molded article, and a dimensional change rate was obtained.

In addition, after the expanded sheet was excised into 330 mm × 330 mm, the time for retaining the excised sheet under the environment of 23°C and relative humidity of 60% was regulated to adjust a moisture amount thereof at 1.7% by mass.

The rectangular box shaped resin expanded molded article obtained by thermally molding this expanded sheet had a dimensional change rate with respect to immediately after molding, of 0.75%.

(Example 4)

According to the same manner as in Example 1 except that the expanded sheet, the moisture content of which had been regulated at 1.2% by mass (31.6% with respect to equilibrium water absorption rate at a temperature of 23°C and a relative humidity of 60%) was used, thermal molding was performed to prepare a rectangular box shaped resin expanded molded article, and a dimensional change rate was obtained.

In addition, after the expanded sheet was excised into 330 mm × 330 mm, the time for retaining the excised sheet under the environment of 23°C and relative humidity of 60% was regulated to adjust a moisture amount thereof at 1.2% by mass.

The rectangular box shaped resin expanded molded article obtained by thermally molding this expanded sheet had a dimensional change rate with respect to immediately after molding, of 0.85%.

(Example 5)

According to the same manner as in Example 1 except that, as the polyamide-based resin, a polyamide 6,6 (manufactured by UNITIKA LTD., product name "E2046"; density 1.14 g/cm$^3$) was used, 1.2 parts by mass as a use amount of a styrene-maleic acid copolymer (SMA1000P) based on 100 parts by mass of this resin (polyamide 6,6) was used in place of 0.3 parts by mass, as well as 280°C as a resin temperature at extrusion was used in place of 230°C, an expanded sheet was prepared.

Thermal molding of the resulting expanded sheet in the state where a moisture amount was 3.0% by mass (100% with respect to equilibrium water absorption rate at a temperature of 23°C and a relative humidity of 60%) was performed to prepare a resin expanded molded article.

This resin expanded molded article was allowed to stand for 168 hours under 23°C and a relative humidity of 60%.

As a result, a dimensional change rate of the resin expanded molded article with respect to immediately after molding was 0.26%.

(Example 6)

The expanded sheet prepared in Example 5 was regulated so that the moisture content became 2.0% by mass (66.7% with respect to equilibrium water absorption rate at a temperature of 23°C and a relative humidity of 60%).

This was thermally molded as in Examples 1 to 5, to prepare a rectangular box shaped resin expanded molded article.

The rectangular box shaped resin expanded molded article obtained by thermally molding this expanded sheet had a dimensional change rate with respect to immediately after molding, of 0.33%.

(Example 7)

The expanded sheet prepared in Example 5 was regulated so that the moisture content became 1.1% by mass (36.7% with respect to equilibrium water absorption rate at a temperature of 23°C and a relative humidity of 60%).

This was thermally molded as in Examples 1 to 5, to prepare a rectangular box shaped resin expanded molded article.

The rectangular box shaped resin expanded molded article obtained by thermally molding this expanded sheet had a dimensional change rate with respect to immediately after molding, of 0.68%.

(Example 8)

According to the same manner as in Example 1 except that, as the polyamide-based resin, an amorphous polyamide (manufactured by UNITIKA LTD., product name "CX-2600"; density 1.11 g/cm$^3$) was used, 0.8 parts by mass as a use amount of a styrene-maleic anhydride copolymer (SMA1000P) based on 100 parts by mass of this resin (amorphous polyamide) was used in place of 0.3 parts by mass, as well as 220°C as a resin temperature at extrusion was used in place of 230°C, an expanded sheet was prepared.

Thermal molding of the resulting expanded sheet in the state where a moisture amount was 2.0% by mass (100% with respect to equilibrium water absorption rate at a temperature of 23°C and a relative humidity of 60%) was performed to prepare a resin expanded molded article.

This resin expanded molded article was allowed to stand for 168 hours under 23°C and a relative humidity of 60%.

As a result, a dimensional change rate of the resin expanded molded article with respect to immediately after molding was 0.13%.

(Example 9)

According to the same manner as in Example 1 except that, as the polyamide-based resin, a blend of a polyamide 6 (manufactured by UNITIKA LTD., product name "A1030BRT") and an amorphous polyamide (manufactured by UNITIKA LTD., product name "CX-2600") at the mass ratio of 5:5 ("A1030BRT": "CX-2600") was used, and 0.8 parts by mass as a use amount of a styrene-maleic anhydride copolymer (SMA1000P) based on 100 parts by mass of this resin was used in place of 0.3 parts by mass, an expanded sheet was prepared.

Thermal molding of the resulting expanded sheet in the state where a moisture amount was 3.2% by mass (100% with respect to equilibrium water absorption rate at a temperature of 23°C and a relative humidity of 60%) was performed to prepare a resin expanded molded article.

This resin expanded molded article was allowed to stand for 168 hours under 23°C and a relative humidity of 60%.

As a result, a dimensional change rate of the resin expanded molded article with respect to immediately after molding was 0.35%.

(Comparative Example 1)

According to the same manner as in Example 1 except that an expanded sheet maintaining the state where the moisture content remained 0.24% by mass (6.3% with respect to equilibrium water absorption rate at a temperature of 23°C and a relative humidity of 60%) from immediately after production was used, thermal molding was performed to prepare a rectangular box shaped resin expanded molded article, and a dimensional change rate was obtained.

The rectangular box shaped resin expanded molded article obtained by thermally molding this expanded sheet had a dimensional change rate with respect to immediately after molding, of 1.90%.

(Comparative Example 2)

According to the same manner as in Example 5 except that the expanded sheet in the state where the moisture content was 0.48% by mass (16.0% with respect to equilibrium water absorption rate at a temperature of 23°C and a relative humidity of 60%) was used, thermal molding was performed to prepare a rectangular box shaped resin expanded molded article, and a dimensional change rate was obtained.

The rectangular box shaped resin expanded molded article obtained by thermally molding this expanded sheet had a dimensional change rate with respect to immediately after molding, of 1.18%.

(Various Properties of Expanded Sheet)

Results of measurement of various properties of the expanded sheets prepared in Examples 1, 5, 8, and 9 are shown in the following Table.

[Table 1]

|  | Example 1 | Example 5 | Example 8 | Example 9 |
|---|---|---|---|---|
| Apparent density (g/cm$^3$) | 0.24 | 0.27 | 0.15 | 0.20 |
| Basis weight (g/m$^2$) | 200 | 200 | 220 | 200 |
| Open cell ratio (%) | 20.0 | 17.0 | 25.0 | 23.8 |
| Average cell diameter (mm) | 0.28 | 0.35 | 0.15 | 0.18 |
| Crystallization heat quantity (J/g) | 55.2 | 50.4 | -*1 | 30.8 |
| Crystallization degree (%) | 24.0 | 22.3 | 0 | 13.4 |
| * 1 An exothermic peak associated with crystallization was not observed. | | | | |

(Thermal Molding Condition)

The sheet heating condition before molding when the expanded sheets prepared in Examples 1, 5, 8, and 9 were thermally molded to prepare resin expanded molded articles of respective Examples and Comparative Examples is shown in the following Table.

In addition, a heater temperature is a set value, and a sheet surface temperature is a value measured with "THERMO LABEL 5E-125" (product name), and "THERMO LABEL 5E-170" (product name) manufactured by NiGK Corporation.

[Table 2]

|  | Example 1 | Example 5 | Example 8 | Example 9 |
|---|---|---|---|---|
| Heater temperature (°C) | 330 | 330 | 330 | 330 |
| Heating time (sec) | 7 | 13 | 7 | 7 |
| Sheet surface temperature (°C) | 140 | 200 | 140 | 140 |

(Heat Resistance)

A degree of thermal deformation was assessed, after the resin expanded molded articles (rectangular box) obtained in respective Examples and Comparative Examples were retained for 22 hours under the environment of 120°C, and were allowed to stand for 1 hour at places of a temperature of 23°C and a relative humidity of 60% (heat resistance test 1).

Additionally, a degree of thermal deformation was assessed, after the resin expanded molded articles (rectangular box) were retained for 22 hours under the environment of 150°C, and allowed to stand for 1 hour at places of a temperature of 23°C and a relative humidity of 60% (heat resistance test 2).

For evaluation, a deformation degree was measured, as in the dimensional change rate before and after water absorption.

Results together with previous evaluation results are shown in the following Table.

[Table 3]

|  | Resin species | Moisture content | Ratio with respect to equilibrium water absorption rate | Dimensional change rate (60%RH × 168h) | Heat resistance test 1 (120°C × 22h) | Heat resistance test 2 (150°C × 22h) |
|---|---|---|---|---|---|---|
| Example 1 | PA6 | 3.8% | 100% | 0.41% | 1.7% | 2.0% |
| Example 2 | PA6 | 2.5% | 65.8% | 0.61% | 2.3% | 2.0% |
| Example 3 | PA6 | 1.7% | 44.7% | 0.75% | 1.5% | 1.8% |
| Example 4 | PA6 | 1.2% | 31.6% | 0.85% | 1.5% | 1.6% |
| Example 5 | PA66 | 3.0% | 100% | 0.26% | 0.9% | 1.2% |
| Example 6 | PA66 | 2.0% | 66.7% | 0.33% | 0.8% | 1.2% |
| Example 7 | PA66 | 1.1% | 36.7% | 0.68% | 0.7% | 1.0% |
| Example 8 | Amorphous PA | 2.0% | 100% | 0.13% | 0.4% | -*1 |
| Example 9 | PA6/ Amorphous | 3.2% | 100% | 0.35% | 1.8% | 2.6% |
| Comparative Example 1 | PA6 | 0.24% | 6.3% | 1.90% | 1.3% | 1.6% |
| Comparative Example 2 | PA66 | 0.48% | 16.0% | 1.18% | 0.6% | 0.9% |
| *1 Thermal deformation was large, and precise measurement could not be performed. | | | | | | |

Also from the foregoing, it is seen that, according to the present invention, external shape change can be suppressed from being generated in the resin expanded molded article obtained by outer shape processing.

**Claims**

1. Use of a resin expanded sheet in thermal molding in which a three-dimensional shape is formed with molding cavities after pre-heating the resin expanded sheet to form a resin expanded molded article after cutting the resin expanded sheet along a product's contour shape, the resin expanded sheet comprising a resin expanded layer, wherein said resin expanded layer includes a polyamide-based resin composition, and contains moisture at 30% or more with respect to an equilibrium water absorption rate at a temperature of 23°C and a relative humidity of 60%, as measured by JIS K0068:2001.

2. The use of the resin expanded sheet according to claim 1, which has a crystallization heat quantity of 20 J/g or more observed when said resin expanded layer is subjected to differential scanning calorimetry.

3. A method for producing a resin expanded molded article, the method comprising subjecting a resin expanded sheet including a resin expanded layer to outer shape processing and performing thermal molding in the outer shape processing to form the resin expanded sheet into a three-dimensional shape using molding cavities after pre-heating the resin expanded sheet, followed by cutting the resin expanded sheet along a product's contour shape to produce a resin expanded molded article, wherein
a resin expanded sheet is used in which said resin expanded layer is formed of a polyamide-based resin composition, and
said outer shape processing is performed while the resin expanded layer contains moisture at 30% or more with respect to an equilibrium water absorption rate of said resin expanded layer at a temperature of 23°C and a relative humidity of 60%, as measured by JIS K0068:2001.

4. The method for producing a resin expanded molded article according to claim 3, wherein said resin expanded molded article to be produced is a food storage container for heating the contained food product with a microwave oven.

5. The method for producing a resin expanded molded article according to claim 3, wherein said resin expanded molded article to be produced is an interior material for automobiles.

6. The method for producing a resin expanded molded article according to claim 3, wherein said resin expanded molded article to be produced is a part for automobiles which is mounted in an engine room of automobiles.

7. The method for producing a resin expanded molded article according to claim 3, wherein said resin expanded molded article to be produced is a tray.

**Patentansprüche**

1. Verwendung einer harzgeschäumten Folie beim thermischen Formen, bei dem eine dreidimensionale Form mit Formhohlräumen nach dem Vorwärmen der harzgeschäumten Folie gebildet wird, um einen harzgeschäumten Formartikel zu bilden, nachdem die harzgeschäumte Folie entlang der Konturform eines Produkts geschnitten wurde, wobei die harzgeschäumte Folie eine harzgeschäumte Schicht umfasst, wobei
die harzgeschäumte Schicht eine Harzzusammensetzung auf Polyamidbasis beinhaltet und Feuchtigkeit bei 30% oder mehr in Bezug auf eine Gleichgewichtswasserabsorptionsrate bei einer Temperatur von 23°C und einer relativen Luftfeuchtigkeit von 60% enthält, gemessen nach JIS K0068:2001.

2. Verwendung der harzgeschäumten Folie nach Anspruch 1, die eine Kristallisationswärmemenge von 20 J/g oder mehr aufweist, die beobachtet wird, wenn die harzgeschäumte Schicht einer Differenzialthermoanalyse unterzogen wird.

3. Verfahren zur Herstellung eines harzgeschäumten Formgegenstandes, wobei das Verfahren das Unterwerfen einer harzgeschäumten Folie, die eine harzgeschäumte Schicht beinhaltet, einer Außenformverarbeitung und das Durchführen eines thermischen Formens in der Außenformverarbeitung umfasst, um die harzgeschäumte Folie in eine dreidimensionale Form unter Verwendung von Formhohlräumen nach Vorwärmen der harzgeschäumten Folie zu formen, gefolgt vom Schneiden der harzgeschäumten Folie entlang der Konturform eines Produkts, um einen harzgeschäumten Formgegenstand herzustellen, wobei
eine harzgeschäumte Folie verwendet wird, in der die harzgeschäumte Schicht aus einer Harzzusammensetzung auf Polyamidbasis gebildet ist, und

die äußere Formverarbeitung durchgeführt wird, während die harzgeschäumte Schicht Feuchtigkeit bei 30% oder mehr in Bezug auf eine Gleichgewichtswasserabsorptionsrate der harzgeschäumten Schicht bei einer Temperatur von 23°C und einer relativen Luftfeuchtigkeit von 60%, gemessen nach JIS K0068:2001, enthält.

**4.** Verfahren zur Herstellung eines harzgeschäumten Formgegenstandes nach Anspruch 3, wobei der herzustellende harzgeschäumte Formgegenstand ein Lebensmittelbehälter zum Erwärmen des enthaltenen Lebensmittelprodukts mit einem Mikrowellenofen ist.

**5.** Verfahren zur Herstellung eines harzgeschäumten Formgegenstandes nach Anspruch 3, wobei der herzustellende harzgeschäumte Formgegenstand ein Innenmaterial für Automobile ist.

**6.** Verfahren zur Herstellung eines harzgeschäumten Formgegenstandes nach Anspruch 3, wobei der herzustellende harzgeschäumte Formgegenstand ein Teil für Automobile ist, das in einem Maschinenraum von Automobilen montiert ist.

**7.** Verfahren zur Herstellung eines harzgeschäumten Formgegenstandes nach Anspruch 3, wobei der herzustellende harzgeschäumte Formgegenstand ein Schalenteil ist.

**Revendications**

**1.** Utilisation d'une feuille expansée de résine dans un moulage thermique dans laquelle une forme tridimensionnelle est formée avec des cavités de moulage après préchauffage de la feuille expansée de résine pour former un article moulé expansé de résine après découpe de la feuille expansée de résine le long de la forme périphérique du produit, la feuille expansée de résine comprenant une couche expansée de résine, dans laquelle
ladite couche expansée de résine comprend une composition de résine à base de polyamide et contient 30% d'humidité ou plus par rapport à un taux d'absorption d'eau d'équilibre à une température de 23°C et une humidité relative de 60%, telle que mesurée par JIS K0068:2001.

**2.** Utilisation de la feuille expansée de résine selon la revendication 1, laquelle présente une quantité thermique de cristallisation de 20 J/g ou plus observée quand ladite couche expansée de résine est soumise à une calorimétrie différentielle à balayage.

**3.** Procédé de production d'un article moulé expansé de résine, le procédé comprenant la soumission d'une feuille expansée de résine comprenant une couche expansée de résine à un traitement de formage extérieur et la réalisation d'un moulage thermique lors du traitement de formage extérieur pour mettre la feuille expansée de résine en une forme tridimensionnelle en utilisant des cavités de moulage après préchauffage de la feuille expansée de résine, suivi par la découpe de la feuille expansée de résine le long de la forme périphérique du produit pour produire un article moulé expansé de résine, dans lequel
une feuille expansée de résine est utilisée dans laquelle ladite couche expansée de résine est formée d'une composition de résine à base de polyamide, et
ledit traitement de formage extérieur est réalisé tandis que la couche expansée de résine contient 30% d'humidité ou plus par rapport à un taux d'absorption d'eau d'équilibre de ladite couche expansée de résine à une température de 23°C et une humidité relative de 60%, telle que mesurée par JIS K0068:2001.

**4.** Procédé de production d'un article moulé expansé de résine selon la revendication 3, dans lequel ledit article moulé expansé de résine à produire est un conteneur de stockage pour aliments destiné à chauffer le produit alimentaire contenu avec un four à micro-ondes.

**5.** Procédé de production d'un article moulé expansé de résine selon la revendication 3, dans lequel ledit article moulé expansé de résine à produire est une matière d'intérieur pour automobiles.

**6.** Procédé de production d'un article moulé expansé de résine selon la revendication 3, dans lequel ledit article moulé expansé de résine à produire est une pièce pour automobiles montée dans l'espace moteur des automobiles.

**7.** Procédé de production d'un article moulé expansé de résine selon la revendication 3, dans lequel ledit article moulé expansé de résine à produire est un bac.

Figure 1

Figure 2a

Figure 2b

Figure 3a

1'

20'

II

II

10'

Figure 3b

20'

10'

Figure 4a

Figure 4b

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3152054 A
- EP 1853655 A0
- JP H05261806 A
- JP 2000086800 A
- EP 2626377 A1
- JP 2013185074 A